(19) Europäisches Patentamt
European Patent Office
Office européen des brevets

(11) EP 4 552 485 A1

(12) **EUROPEAN PATENT APPLICATION**

(43) Date of publication:
14.05.2025 Bulletin 2025/20

(51) International Patent Classification (IPC):
*A01K 5/00* (2006.01)       *G01N 21/3563* (2014.01)
*G01N 21/359* (2014.01)

(21) Application number: 24168650.0

(22) Date of filing: 05.04.2024

(52) Cooperative Patent Classification (CPC):
**A01K 5/001;** G01N 21/3563; G01N 21/359

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 10.11.2023 EP 23208976

(71) Applicant: **DINAMICA GENERALE S.p.A**
**46025 Poggio Rusco (IT)**

(72) Inventors:
• **GHIRALDI, Anna**
**46025 POGGIO RUSCO (MN) (IT)**
• **BERTOLANI, Nicola**
**46025 POGGIO RUSCO (MN) (IT)**

(74) Representative: **Studio Torta S.p.A.**
**Via Viotti, 9**
**10121 Torino (IT)**

(54) **METHOD FOR OPTIMISING LOADING ANIMAL FEED RECIPE INGREDIENTS INTO A MIXER WAGON**

(57) Method for optimising loading animal feed recipe ingredients into a tank (4) of a mixer wagon (1) having a mixing system (7) for mixing the ingredients in the tank (4) to obtain a mixture, wherein the recipe envisages, for each ingredient, a theoretical as-is weight of the ingredient ($P_{tqTeo(i)}$) and a theoretical dry matter percentage of the ingredient or of at least one nutrient of the ingredient ($\%DM_{Teo(i)}$; $\%DM_{Teo(i,j)}$) and wherein, for each ingredient, an actual dry matter percentage of the ingredient or the nutrient of the ingredient ($\%DM_{Act(i)}$; $\%DM_{Act(i,j)}$) is determined as a function of a reflectance spectrum of the ingredient or of the mixture acquired by means of an electromagnetic spectrum analyser (13) and a target as-is weight of the ingredient ($P_{tqTarg(i)}$) to be loaded into the tank (4) is determined as a function of the theoretical as-is weight of the ingredient ($P_{tqTeo(i)}$), the theoretical dry matter percentage of the ingredient or nutrient of the ingredient ($\%DM_{Teo(i)}$; $\%DM_{Teo(i,j)}$) and the actual dry matter percentage of the ingredient or nutrient of the ingredient ($\%DM_{Act(i)}$; $\%DM_{Act(i,j)}$).

FIG.2

EP 4 552 485 A1

**Description**

Cross reference to related patent Applications

This patent application claims priority of European patent application no. 23208976.3 filed on 10 November 2023, the content of which is incorporated herein by reference.

Technical field

The present invention relates to a method for optimising loading animal feed recipe ingredients into a mixer wagon.

In particular, the present invention finds advantageous, but not exclusive, application in the optimal management of a recipe of ingredients for feeding ruminant livestock, to which the following description will make explicit reference without losing generality.

Background

The feed commonly used for ruminant animals on most modern farms is represented by a single mixture distributed in a trough. This feed is obtained by mixing together different ingredients such as hay, silage, grains, water, supplements, and is referred to in technical jargon as TMR (Total Mixed Ration), or Unifeed. The animals are typically divided into homogeneous groups according to their nutritional needs and a nutritionist defines, for each group of animals, an optimal recipe of ingredients to meet the needs of the animals in that group of animals. The recipe defines the order wherein the ingredients are loaded, the quantity of each ingredient per head of livestock and the resulting total weight of the ration per group of animals, which is obtained as the sum of the contributions of the different ingredients, and the contribution of each ingredient is obtained by multiplying the weight of the ingredient by the number of animals in the group. Consequently, different groups of animals are fed with different recipes in terms of type and quantity of ingredients.

The mixture, or TMR, is created by loading one ingredient at a time inside a tank of a mixer wagon following the recipe and adjusting the quantity by weight of each ingredient which is loaded as a function of the theoretical quantity of ingredient indicated in the recipe, the weight measured by load cells applied to the tank, and a real-time analysis of the ingredient carried out by an optoelectronic instrument, e.g., a Near InfraRed (NIR) analyser.

However, the known art for adjusting the quantity of ingredients to be loaded do not take into account the quantity of water actually contained by the ingredients, and this results in the TMR actually distributed in the trough often not matching what has been established by the recipe. Furthermore, when the actual dry matter of the ingredients in the mixture is greater than that stipulated in the recipe, there is a greater likelihood that the animal will select the foods in the mixture with the highest palatability, typically grains, resulting in a possible increase in metabolic dysfunction in the animal.

Summary

The aim of the present invention is to provide a method for adjusting the quantities of the ingredients of an animal feed recipe when loading the ingredients into the tank of a mixer wagon, which method is free from the drawbacks described above and, at the same time, is easy and inexpensive to implement.

In accordance with the present invention, a method is provided for optimising loading animal feed recipe ingredients into a container of a mixer wagon, as defined in the appended claims 1 to 9. Furthermore, a method is provided for modulating the quantity of water in an animal feed ingredient recipe when loading the ingredients into a container of a mixer wagon, as defined in the appended claims 10 to 13. Furthermore, an apparatus is provided for mixing ingredients of an animal feed recipe as defined by claim 14.

The claims describe preferred embodiments of the present invention, to be considered an integral part of the present description.

Brief description of the drawings

The present invention will now be described with reference to the attached drawings, which illustrate show a non-limiting embodiment thereof, wherein:

-    figure 1 illustrates a perspective view from one side of a mixer wagon configured to implement the method of the present invention;
-    figure 2 illustrates the mixer wagon according to a perspective view from the opposite side;
-    figure 3 illustrates, in greater detail, an electromagnetic spectrum analyser mounted on the mixer wagon of figures 1 and 2 during a step of the method of the present invention;

- figure 4 illustrates the electromagnetic spectrum analyser of figure 3 during a step of a further embodiment of the method of the invention; and
- figure 5 illustrates the electromagnetic spectrum analyser of figure 3 during a step of a second further embodiment of the method of the present invention.

Description of embodiments

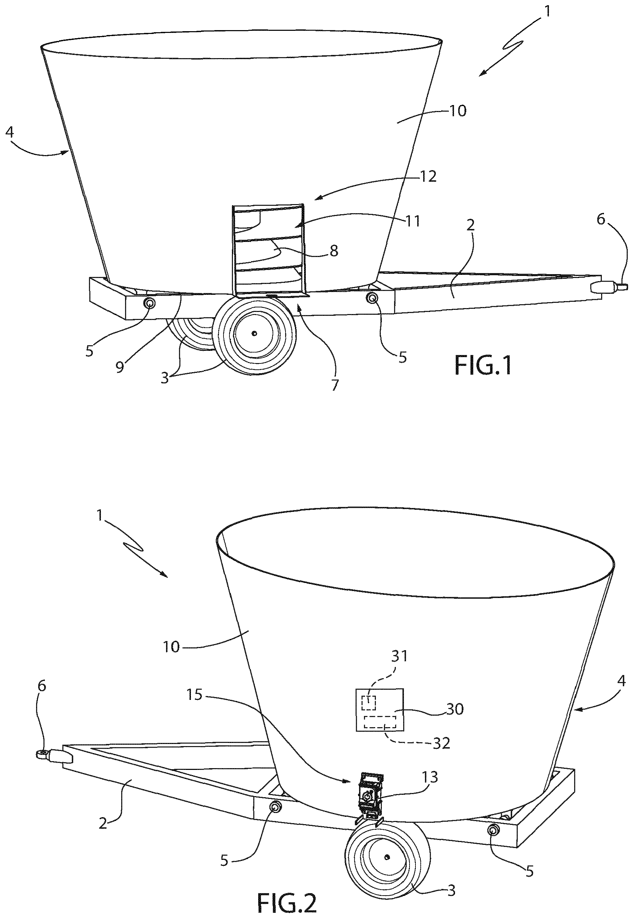

In Figures 1 and 2, a mixer wagon for mixing the ingredients of a recipe for feeding animals, and in particular ruminant livestock, is indicated overall with 1. The recipe ingredients comprise, for example, hay, silage, grains, water, supplements.

The mixer wagon 1 comprises a frame 2 provided with wheels 3 and a container, and in particular a tank 4, mounted on the frame 2 and gravimetric sensors applied to the tank 4 to measure the weight of the contents of the tank 4. In particular, the gravimetric sensors comprise a plurality of load cells 5, in particular four load cells 5 mounted at the corners of a rectangular portion of the frame 2, and the tank 4 is mounted on the load cells 5 to weigh the contents of the tank 4. In the example shown, the mixer wagon 1 is of the towed type and therefore the frame 2 is provided with a towing eye 6.

The mixer wagon 1 comprises a motorised mixing system 7, which is applied to the tank 4 for mixing the ingredients in the tank 4. The mixing system 7 comprises, for example, an auger 8 (figure 1) with a vertical axis, designed to rotate inside the tank 4, and a motor (not illustrated) for rotating the auger 8.

The tank 4 is open above to be able to receive the ingredients. In particular, the tank 4 has a bottom 9, on the inner side of which the auger 8 is mounted, and a side wall 10, which surrounds the bottom 9. The tank 4 has an outlet opening 11, obtained in a portion 12 of the side wall 10 adjacent to the bottom 9 to let out the mixture, i.e., the TMR, at the end of a mixing process.

Hereinafter, mixing process is intended as the entire process which comprises loading the ingredients one at a time into the tank 4 and mixing the ingredients as they are loaded into the tank 4 until reaching the mixture ready for distribution.

Preferably, the outlet opening 11 is provided with a hatch (not illustrated) for holding the ingredients in the tank 4 during the mixing process.

The mixer wagon 1 comprises an electromagnetic spectrum analyser 13 for acquiring reflectance spectra of the mixture in the tank 4 or of samples of ingredients outside the tank 4 during the mixing process.

The electromagnetic spectrum analyser 13 is an optoelectronic instrument of known type designed to acquire reflectance spectra of electromagnetic radiation in a range of the electromagnetic spectrum comprising visible light and/or infrared radiation. Preferably, the electromagnetic spectrum analyser 13 operates in what is known as the near-infrared (NIR) range of electromagnetic radiation and is therefore also commonly known as an NIR analyser.

The electromagnetic spectrum analyser 13 comprises an electromagnetic radiation source to 'illuminate' the mixture and an electromagnetic radiation sensor to acquire the electromagnetic radiation reflected by the mixture. The reflectance spectrum provided by the electromagnetic spectrum analyser 13 in practice comprises a plurality of reflectance values acquired for a corresponding plurality of wavelength values in the electromagnetic spectrum range wherein the electromagnetic spectrum analyser 13 operates.

The electromagnetic spectrum analyser 13 further comprises a processing unit thereof to process the reflectance spectra in order to obtain other quantities related to the mixture, as will be explained in detail hereinafter.

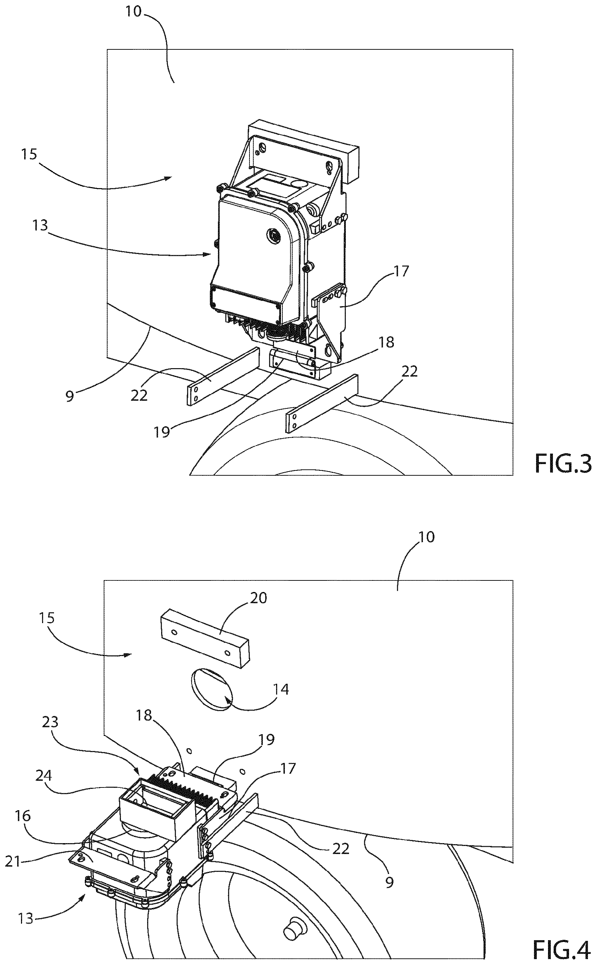

With particular reference to figures 3 and 4, the tank 4 has an opening 14 (figure 4) obtained in a portion 15 of the side wall 10 of the tank 4, near the bottom 9 and substantially opposite the portion 12 wherein the outlet window 11 is obtained, and the electromagnetic spectrum analyser 13 comprises a reading window 16 (figure 4) which can be coupled with the opening 14. In particular, the opening 14 has the same shape as the reading window 16 in order to make a form fitting which allows the reading window 16 to close the opening 14.

The electromagnetic spectrum analyser 13 comprises a support frame 17, which has one side 18 mounted on the tank 4 at the portion 15 by means of a hinge 19 for moving the electromagnetic spectrum analyser 13 between a first operating position, wherein the reading window 16 is coupled with the opening 14 and is therefore facing towards the inside of the body 4 (figure 3), and a second operating position, wherein the reading window 16 is uncoupled from the opening 14 and is facing outside the body 4, and in particular upwards (figure 4).

The tank 4 comprises an anchoring plate 20 fixed at the portion 15 and a side 21 of the support frame 17 opposite the side 18 can be fixed, e.g., by means of screws, to the anchoring plate 20 when the electromagnetic spectrum analyser 13 is in the first operating position. The tank 4 further comprises a pair of brackets 22 protruding outwards from the portion 15 and the support frame 17 can be fixed, e.g., by means of screws, to the brackets 22 when the electromagnetic spectrum analyser 13 is in the second operating position.

The opening 14 is a few tens of centimetres away from the bottom 9 so that it is in front of a portion of the internal volume of the tank 4 wherein there is a high flow of mixture. Therefore, when the electromagnetic spectrum analyser 13 is in the first operating position, the reading window 16 is placed in front of an internal volume portion of the tank 4 wherein there is reasonably always a good quantity of mixture kept moving by the auger 8. Therefore, the first operating position allows the electromagnetic spectrum analyser 13 to acquire reflectance spectra of the mixture in the tank 4 during the mixing of the ingredients.

The electromagnetic spectrum analyser 13 is provided with a sampling container 23 designed to contain a sample of an ingredient of the recipe and to be placed on the reading window 16 when the electromagnetic spectrum analyser 13 is in the second operating position to allow the latter to acquire a reflectance spectrum of the ingredient. In particular, the sampling container 23 has a bottom wall 24 thereof which is transparent to the electromagnetic radiation at which the electromagnetic spectrum analyser 13 operates and, in use, is arranged with the bottom wall 24 facing the reading window 16.

Advantageously, the sampling container 23 is provided with a presser element (not shown) for pressing the ingredient sample against the bottom wall 24.

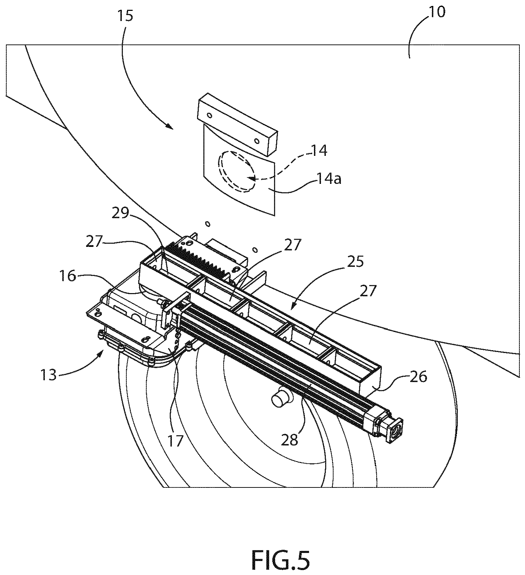

According to a further embodiment illustrated in figure 5, the electromagnetic spectrum analyser 13 is provided, instead of the single sampling container 23, with a multiple sampler 25, which is motorised and can be applied on the support frame 17 when the electromagnetic spectrum analyser 13 is in the second operating position.

In particular, the multiple sampler 25 comprises an oblong-shaped box-like frame 26, a plurality of sampling containers 27, each of which is designed to contain a sample of a respective recipe ingredient and which are arranged in a row in the box-like frame 26, and a linear actuator 28 for moving the box-like frame 26 longitudinally with respect to the electromagnetic spectrum analyser 13 so as to position the sampling containers 27 one at a time on the reading window 16.

The box-like frame 26 is open below and each sampling container 27 has a bottom wall 29 which is transparent to the electromagnetic radiation at which the electromagnetic spectrum analyser 13 operates and which, in use, faces the reading window 16 when the sampling container 27 is placed on the reading window 16 to allow the electromagnetic spectrum analyser 13 to acquire a reflectance spectrum of the ingredient in the sampling container 27.

Advantageously, each sampling container 27 is provided with a respective presser element (not illustrated) for pressing the ingredient sample against the bottom wall 29.

Advantageously, the mixer wagon 1 includes a bulkhead 14a which can be placed on the portion 15 of the side wall 10 for closing the opening 14 when the electromagnetic spectrum analyser 13 is in the second operating position.

With reference again to figure 2, the mixer wagon 1 lastly comprises a processing and control unit 30, which is integral with, for example, the frame 2 or with the tank 4, and comprises a memory 31 for storing parameters and reference data, for example the recipe of ingredients to be loaded into the tank 4. Advantageously, the processing and control unit 30 comprises a human-machine interface 32, typically comprising a keyboard and display or a touch-screen display, for receiving commands from an operator and displaying indications which allow to guide the operator in loading the ingredients into the tank 4.

The processing and control unit 30 and the processing unit of the electromagnetic spectrum analyser 13 are configured to implement the method for optimising loading ingredients described hereinafter, which in summary consists of adjusting the quantities of ingredients to be loaded into the mixer wagon 1.

Firstly, the ingredient recipe comprises an ingredient loading sequence and, for each ingredient, hereinafter also referred to as the i-th ingredient, the following parameters:

- a respective theoretical as-is weight of the ingredient $P_{tqTeo(i)}$ to be loaded into the bin 5;
- a respective percentage $\%P_{tqTeo(i)}$ of the theoretical as-is weight of the ingredient;
- a respective theoretical dry matter percentage of the ingredient $\%DM_{Teo(i)}$;
- a respective waiting period $T_{(i)}$ between loading a portion of the ingredient and loading a remaining portion of the ingredient, to be determined with the optimisation method, while the mixing system 7 continues to mix the contents of the tank 4; and
- at least one respective predictive model to be applied to the acquired reflectance spectrum to estimate an effective dry matter percentage.

Some examples of ingredients comprising dry matter are hay, silage and grain.

In use, the operator loads the ingredients one at a time into the tank 4 following the loading order communicated thereto through human-machine interface 32. The mixing system 7 typically remains active during the ingredient loading. The electromagnetic spectrum analyser 13 remains in the first operating position (figure 3) during the ingredient loading.

In general terms, for each ingredient which is loaded, an actual dry matter percentage of the ingredient $\%DM_{Act(i)}$ is determined as a function of the reflectance spectrum of the mixture, and then a target as-is weight of the ingredient $P_{tqTarg(i)}$ is determined as a function of the theoretical dry matter percentage of the ingredient $\%DM_{Teo(i)}$, the theoretical as-is weight of the ingredient $P_{tqTeo(i)}$, and the actual dry matter percentage of the ingredient $\%DM_{Act(i)}$. The target as-is weight $P_{tqTarg(i)}$ defines the quantity of ingredient to be loaded into the tank 4.

In particular, the processing and control Unit 30 calculates the target as-is weight of the ingredient $P_{tqTarg(i)}$ by means of the following formula:

$$P_{tqTarg(i)} = \frac{\%DM_{Teo(i)} \cdot P_{tqTeo(i)}}{\%DM_{Act(i)}} \, . \qquad [1]$$

The target as-is weight of the ingredient $P_{tqTarg(i)}$ is displayed by the human-machine interface 32.

In more detail, for each ingredient to be loaded, first a portion of the ingredient corresponding to the percentage of the theoretical as-is weight of the ingredient is loaded into the tank 4. The processing and control Unit 30 calculates the portion of the ingredient as the product of the respective percentage $\%P_{tqTeo(i)}$ by the respective theoretical as-is weight $P_{tqTeo(i)}$. The ingredient portion is displayed by the human-machine interface 32, which is consulted by an operator before proceeding with the loading.

By way of example, the generic percentage $\%P_{tqTeo(i)}$ is comprised between 80% and 90%. This range of values allows to load, initially, a rather high portion of the ingredient in order to obtain actual dry matter percentage values of the ingredient $\%DM_{Act(i)}$ which are representative of the ingredient itself, while at the same time having a significant margin of intervention for adjusting the quantity of ingredient to be loaded so as to achieve the target as-is weight of the ingredient $P_{tqTarg(i)}$.

The actual dry matter percentage of the ingredient $\%DM_{Act(i)}$ is determined after having waited at least the time period $T_{(i)}$ from the end of loading the ingredient portion while the mixing system 7 works to mix the mixture. In particular, the processing and control unit 30 receives a command from the operator to end the loading of the portion and displays the end of the time period $T_{(i)}$ by means of the human-machine interface 32.

To determine the actual dry matter percentage of the ingredient $\%DM_{Act(i)}$, the processing unit of the electromagnetic spectrum analyser 13 processes the reflectance spectrum of the mixture, applying a predictive model.

At this point, after having calculated the target as-is weight of the ingredient $P_{tqTarg(i)}$ by means of the formula [1], the processing and control unit 30 calculates the weight of a residual ingredient portion as the difference between the target as-is weight and the already loaded ingredient portion and displays the weight of a residual portion by means of the human-machine interface 32 to inform the operator, who can then proceed with loading the residual ingredient portion into the tank 4.

In more detail, for each ingredient which is loaded, an actual as-is weight of the mixture $P_{tqM(i)}$ is measured by means of the load cells 5 after the ingredient portion has been loaded. The actual dry matter percentage of the ingredient $\%DM_{Act(i)}$ is determined as a function of the reflectance spectrum of the mixture and the actual as-is weight of the mixture $P_{tqM(i)}$.

In even more detail, the processing and control unit 30 determines the actual dry matter percentage of the ingredient $\%DM_{Act(i)}$, performing the following steps:

- after waiting the period of time $T_{(i)}$ from the loading of the ingredient portion, acquiring an actual percentage of dry matter in the mixture $\%DM_{ActM(i)}$ obtained as a function of the reflectance spectrum of the mixture by means of the electromagnetic spectrum analyser 13; and
- determining the actual dry matter percentage of the ingredient $\%DM_{Act(i)}$ as a function of the actual as-is weight of the mixture $P_{tqM(i)}$ and the actual dry matter percentage in the mixture $\%DM_{ActM(i)}$.

In particular, the processing unit of the electromagnetic spectrum analyser 13 is configured to estimate the actual percentage of dry matter in the mixture $\%DM_{ActM(i)}$ as a function of the reflectance spectrum of the mixture, and the processing and control unit 30 is configured to acquire such an actual percentage. The step of estimating the actual percentage of dry matter in the mixture $\%DM_{ActM(i)}$ consists of processing the reflectance spectrum of the mixture by applying the predictive model associated with the dry matter to such a reflectance spectrum.

In even greater detail, the determination of the actual dry matter percentage of the ingredient $\%DM_{Act(i)}$ as a function of the actual as-is weight of the mixture $P_{tqM(i)}$ and the actual dry matter percentage in the mixture $\%DM_{ActM(i)}$ comprises the following steps performed by the processing and control unit 30.

An actual dry matter weight in the mixture $PDM_{ActM(i)}$ is calculated by means of the following formula:

$$PDM_{ActM(i)} = \%DM_{ActM(i)} \cdot P_{tqM(i)} \, . \qquad [2]$$

For each ingredient which is loaded, at least the actual as-is weight of the mixture $P_{tqM(i)}$ and the actual dry matter weight in the mixture $PDM_{ActM(i)}$ are stored in memory 31 to be used during the loading of the next ingredient, according to the loading order.

The data of actual as-is weight of the mixture and actual dry matter weight in the mixture stored upon loading each ingredient serve for certain calculations to be performed upon loading the next ingredient, i.e., to calculate a difference of actual dry matter weight in the mixture and a difference of actual as-is weight of the mixture, between loading the actual ingredient and loading the previous ingredient, according to the loading order. Such weight differences are used to calculate the actual dry matter percentage of the ingredient $\%DM_{Act(i)}$. In particular, the actual dry matter percentage of the i-th ingredient $\%DM_{Act(i)}$ is calculated by means of the following formula:

$$\%DM_{Act(i)} = \frac{PDM_{ActM(i)} - PDM_{ActM(i-1)}}{P_{tqM(i)} - P_{tqM(i-1)}}, \qquad [3]$$

wherein $PDM_{ActM(i-1)}$ is the actual dry matter weight in the mixture calculated upon loading the previous ingredient and $P_{tqM(i-1)}$ is the actual as-is weight of the mixture upon loading the previous ingredient.

For the first ingredient of the recipe (i = 1), the formulae [2] and [3] are simplified and the following is obtained:

$$\%DM_{Act(1)} = \%DM_{ActM(1)},$$

i.e., the actual dry matter percentage of the first ingredient is obtained directly from the reflectance spectrum of the mixture acquired by means of the electromagnetic spectrum analyser 13 after loading the first ingredient portion.

The method for optimising ingredient loading described above is particularly advantageous when all or a substantial majority of the ingredients of the recipe are subject to a significant variability in the respective dry matter percentage during storage in the storage areas. However, the fact of having to pre-load a portion of each ingredient and having to wait a certain period of time $T_{(i)}$ for mixing for each pre-loaded ingredient before being able to calculate the target as-is weight of the ingredient $P_{tqTarg(i)}$ results in a lengthening of the overall loading time of all the ingredients in the recipe.

According to a further embodiment of the method for optimising ingredient loading, before loading the ingredients into the tank 4, the electromagnetic spectrum analyser 13 is placed, typically manually, in the second operating position (figure 4). One ingredient at a time, a sample of the ingredient is loaded into the sampling container 23 and the latter is arranged above the reading window 16 of the electromagnetic spectrum analyser 13, as illustrated in figure 4, so that the latter acquires a reflectance spectrum of the ingredient. The processing unit of the electromagnetic spectrum analyser 13 is configured to determine, and in particular to estimate, the actual dry matter percentage of the ingredient $\%DM_{Act(i)}$ as a function of the reflectance spectrum of the ingredient.

The step of estimating the actual dry matter percentage of the ingredient $\%DM_{Act(i)}$ consists of processing the reflectance spectrum of the ingredient by applying the predictive model associated with the ingredient to such a reflectance spectrum. The processing and control unit 30 records the actual dry matter percentages of all the ingredients in the memory 31, calculates the respective target as-is weights of all the ingredients by means of the formula [1], and stores the target as-is weights in the memory 31 to be used during the ingredient loading.

Once the actual dry matter percentages of all the ingredients have been recorded, the electromagnetic spectrum analyser 13 is returned to the first operating position so as to close the opening 14. Alternatively, the electromagnetic spectrum analyser 13 remains in the second operating position and the bulkhead 14a is placed for closing the opening 4.

For each ingredient to be loaded, the processing and control unit 30 controls the human-machine interface 32 to display the respective target as-is weight $P_{tqTarg(i)}$. The operator loads the ingredients one at a time into the tank 4 following the recipe loading order and the target as-is weight indications $P_{tqTarg(i)}$ displayed by the human-machine interface 32. The mixing system 7 typically remains active during the ingredient loading.

The embodiment described above with reference to figure 4 allows to considerably reduce the overall loading time of the ingredients, as each ingredient is loaded in one go, without splitting between initial and final residual portion, and there is no need to wait for time periods $T_{(i)}$ between loading two successive ingredients.

In essence, by using the electromagnetic spectrum analyser 13 which is different from the one shown in figure 3, the actual dry matter percentage of the ingredient $\%DM_{Act(i)}$ is directly determined for each ingredient, without going through the estimation of the actual dry matter percentage in the mixture $\%DM_{ActM(i)}$ during the loading of each ingredient. However, a preparation step is required wherein samples of all the ingredients are analysed one by one to obtain the actual dry matter percentage of the ingredient $\%DM_{Act(i)}$.

According to a further embodiment of the method for optimising loading ingredients, prior to loading the ingredients into the tank 4, the electromagnetic spectrum analyser 13 is placed, typically manually, in the second operating position, the bulkhead 14a is placed to close the opening 4 and the multiple sampler 25 is applied to the support frame 17 of the electromagnetic spectrum analyser 13 (figure 5). Furthermore, a sample of a respective ingredient of the recipe is inserted into each sampling container 27 of the multiple sampler 25 so that the order of the ingredient samples in the row of sampling containers 27 corresponds to the loading order of the recipe.

The processing and control unit 30 is configured to control the actuator 28 so that, for each ingredient to be loaded into the tank 4, the sampling container 27 associated with the ingredient is arranged with the bottom wall 29 thereof on the reading window 16 of the electromagnetic spectrum analyser 13 to allow the latter to acquire a reflectance spectrum of the ingredient.

Having acquired the reflectance spectrum of the ingredient, the electromagnetic spectrum analyser 13 proceeds to determine, and in particular estimate, the actual dry matter percentage of the ingredient $\%DM_{Act(i)}$ as a function of the reflectance spectrum of the ingredient. Also in this embodiment, the step of estimating the actual dry matter percentage of the ingredient $\%DM_{Act(i)}$ consists of processing the reflectance spectrum of the ingredient by applying the predictive model associated with the ingredient to such a reflectance spectrum.

At this point, the processing and control unit 30 calculates the target as-is weight $P_{tqTarg(i)}$ for the ingredient using the formula [1] and controls the human-machine interface 32 to display such a weight. The operator loads a quantity of ingredient into the tank 4 corresponding to the displayed weight and then by means of the human-machine interface 32 controls processing and control unit 30 to proceed with analyses and processing for the next ingredient.

The embodiment described above with reference to figure 5 allows to further reduce the overall loading time of the ingredients with respect to the embodiment described above with reference to figure 4, as it reduces the time spent for analysing the samples of individual ingredients thanks to the automation of the multiple sampler 25. Also in this case, the actual dry matter percentage of the ingredient $\%DM_{Act(i)}$ is directly determined for each ingredient, without going through the estimation of the actual dry matter percentage in the mixture $\%DM_{ActM(i)}$ during the loading of each ingredient.

According to further embodiments of the method for optimising loading ingredients, which are derived from those described above, the formulae [1], [2] and [3] and the resulting method steps are performed only for a subset of ingredients in the recipe, e.g., silage, while for the remaining ingredients a quantity corresponding to the theoretical as-is weight $P_{tqTeo(i)}$ in the recipe is loaded. These embodiments allow to save as many time periods $T_{(i)}$ spent for mixing and/or calculation time and/or loading time of the sample containers 23 and 27 as there are ingredients not comprised in the aforesaid subset. Furthermore, such embodiments allow to save the costs for creating and updating the predictive models of ingredients not comprised in the aforesaid subset.

According to further embodiments of the method for optimising loading ingredients, which are derived from those described above and take into account the fact that each ingredient comprises at least one nutrient, e.g., crude protein, ADF (Acid Detergent Fibre) and NDF (Neutral Detergent Fibre), the recipe comprises, for each ingredient of at least a subset of ingredients of the recipe, a respective theoretical percentage of at least one nutrient of the ingredient, and a respective predictive model to be applied to the acquired reflectance spectrum to estimate an actual nutrient percentage, and the formulae [1], [2] and [3] and related method steps are performed with reference to the particular nutrient of the ingredient.

'Nutrient of the ingredient' is intended as the dry matter of the nutrient of the ingredient. In other words, a nutrient of an ingredient is a part of the (total) dry matter of the ingredient.

In particular, assuming that the theoretical percentage of the j-th nutrient of the i-th ingredient is denoted with $\%DM_{Teo(i,j)}$, then the formulae [1], [2] and [3] can be generalised with the following formulae:

$$P_{tqTarg(i)} = \frac{\%DM_{Teo(i,j)} \cdot P_{tqTeo(i)}}{\%DM_{Act(i,j)}} , \qquad [4]$$

$$PDM_{ActM(i,j)} = \%DM_{ActM(i,j)} \cdot P_{tqM(i)} , \qquad [5]$$

$$\%DM_{Act(i,j)} = \frac{PDM_{ActM(i,j)} - PDM_{ActM(i-1,j)}}{P_{tqM(i)} - P_{tqM(i-1)}} , \qquad [6]$$

wherein $\%DM_{Act(i,j)}$ is the actual percentage of the j-th nutrient of the i-th ingredient, $\%DM_{ActM(i,j)}$ is the actual percentage of the j-th nutrient in the mixture after having loaded the portion of the i-th ingredient, and $PDM_{ActM(i,j)}$ is the actual weight of the j-th nutrient in the mixture after having loaded the portion of the i-th ingredient.

Wanting to generalise the embodiments just described, taking into account a plurality of nutrients for each ingredient of at least a subset of ingredients of the recipe, the ingredient recipe comprises, for each nutrient of a plurality of nutrients of each ingredient of at least a subset of ingredients of the recipe, a respective weight coefficient to multiply by the theoretical and actual percentages of the relative nutrient to obtain a linear combination associated with the ingredient which defines a new dry matter parameter of the ingredient to which reference is made for determining the target as-is weight of each ingredient. Such a new parameter will hereinafter be called combined dry matter percentage.

In particular, the theoretical combined dry matter percentage of the ingredient is defined by the following formula:

$$\%DM_{Teo(i)} = \sum_{j=1}^{N(i)} X_{(i,j)} \cdot \%DM_{Teo(i,j)} \qquad [7]$$

wherein $N(i)$ is the number of nutrients of the i-th ingredient, $\%DM_{Teo(i,j)}$ is the theoretical percentage of the j-th nutrient of the i-th ingredient and $X_{(i,j)}$ is the weight coefficient associated with the j-th nutrient of the i-th ingredient.

Consequently, the actual combined dry matter percentage of the ingredient is defined by the following formula, denoted hereinafter with [8]:

$$\%DM_{Act(i)} = \sum_{j=1}^{N(i)} X_{(i,j)} \cdot \%DM_{Act(i,j)} \qquad [8]$$

wherein $\%DM_{Act(i,j)}$ is the actual percentage of the j-th nutrient of the i-th ingredient, which is determined differently according to the different modes of using the electromagnetic spectrum analyser 13 described above with reference to figures 3, 4 and 5. For example, in the mode of use related to figure 3, the actual percentage of the j-th nutrient in the i-th ingredient $\%DM_{Act(i,j)}$ can be calculated with the formulae [5] and [6] as a function of the actual percentage of the j-th nutrient in the mixture $\%DM_{ActM(i,j)}$ and the actual weight of the j-th nutrient in the mixture $PDM_{ActM(i,j)}$ obtained during the loading of the current ingredient and the previous ingredient.

The values of the weight coefficients of $X_{(i,j)}$ are established as a function of the importance to be given to the specific j-th nutrient of a certain i-th ingredient.

For example, assuming that the ingredient identified by the index i=1 is maize silage, then the most important nutrients for the feed are starch and sugars, which can be identified with the indices j=1 and j=2, respectively, therefore the respective weight coefficients can have the following values:

$$X_{(1,1)} = 0.8; \; X_{(1,2)} = 0.2 \,.$$

According to another example, assuming that the ingredient with index i=2 is alfalfa hay, then the most important nutrients for the feed are crude protein and NDF fibre, which can be identified with the indices j=1 and j=2, respectively, therefore the respective weight coefficients can have the following values:

$$X_{(2,1)} = 0.7; \; X_{(2,2)} = 0.3 \,.$$

Typically, the ingredient recipe comprises an ingredient which is not the first following the loading order and which consists of water. Therefore, the ingredient recipe comprises a theoretical as-is weight of water, while the theoretical dry matter percentage of water is obviously zero.

According to a further aspect of the method for optimising ingredient loading, the quantity of water to be loaded into the tank 4 is modulated as a function of the theoretical parameters of the ingredients to be loaded up to the water (i.e., comprising the ingredient water) and as a function of the measurements made on the mixture by means of the load cells 5 and the electromagnetic spectrum analyser 13 before actually loading the water into the tank 4.

The modulation of the water to be loaded into tank 4 is obtained with the electromagnetic spectrum analyser 13 in the first operating position (figure 3) and by performing the steps described hereinafter.

When the time comes to load the water into the tank 4, i.e., after the ingredient preceding water in the recipe loading order has been loaded, the electromagnetic spectrum analyser 13 acquires the reflectance spectrum of the mixture and, by means of the processing unit thereof, estimates an actual percentage of dry matter in the mixture $\%DM_{ActM(i-1)}$ as a function of the reflectance spectrum of the mixture, the processing and control unit 30 acquires an actual as-is weight of the mixture $P_{tqM(i-1)}$, measured by means of the load cells 5, and calculates a theoretical dry matter percentage of the mixture $\%DM_{TeoM(i)}$ as a function of the theoretical as-is weight and the theoretical dry matter percentage of all the ingredients to be loaded up to water (i.e., comprising the ingredient consisting of water). In the symbols used above, water is considered the i-th ingredient.

In particular, the theoretical dry matter percentage of the mixture $\%DM_{TeoM(i)}$ is calculated with the following formula:

$$\%DM_{TeoM(i)} = \frac{\sum_{k=1}^{i} \%DM_{Teo(k)} \cdot P_{tqTeo(k)}}{\sum_{k=1}^{i} P_{tqTeo(k)}}, \qquad [9]$$

wherein the two summations extend, precisely, to all the ingredients to be loaded until water.

Advantageously, the processing and control unit 30 waits a preestablished time period TF from loading the ingredient preceding the water before acquiring the actual dry matter percentage in the mixture $\%DM_{ActM(i-1)}$ by means of the electromagnetic spectrum analyser 13.

The processing and control unit 30 calculates a target as-is weight of the water $P_{tqH2O}$ as a function of the actual dry matter percentage in the mixture $\%DM_{ActM(i-1)}$, the actual as-is weight of the mixture $P_{tqM(i-1)}$ and the theoretical dry matter percentage in the mixture $\%DM_{TeoM(i)}$.

In particular, the calculation of the target as-is weight of the water $P_{tqH2O}$ comprises the following steps:

- if the actual dry matter percentage of the mixture $\%DM_{ActM(i-1)}$ is greater than the theoretical dry matter percentage of the mixture $\%DM_{TeoM(i)}$, then the target as-is weight of the water is calculated with the following formula:

$$P_{tqH20} = P_{tqM(i-1)} \cdot \left( \frac{\%DM_{ActM(i-1)} - \%DM_{TeoM(i)}}{\%DM_{TeoM(i)}} \right); \qquad [10]$$

- otherwise the target as-is weight of the water is set to zero.

It should be noted that the formula [10] is obtained by applying the formula [2] to two situations of the mixture, the first situation being before loading the water and the second situation being after loading the water, and imposing that the dry matter percentage of the water is zero.

At this point, the processing and control unit 30 commands the human-machine interface 32 to display the target as-is weight of the water $P_{tqH2O}$ which represents the quantity of water which the operator must load into the tank 4.

The modulation of the quantity of water to be loaded into the tank 4 of a mixer wagon 1 described above is applicable to any of the embodiments of the method for optimising loading ingredients described above, which differ, in summary, in the different modes of determining the actual dry matter percentage or the actual percentage of at least one nutrient of each ingredient used to calculate the target as-is weight of each ingredient to be loaded into the tank 4. The modulation of the quantity of water described above allows to perfect the optimisation of the TMR actually achieved at the end of the mixing process by acting directly on the ingredient water.

According to a further embodiment not illustrated, the mixer wagon 1 comprises, instead of the tank 4, an oblong tank and, instead of the vertical-axis auger 8, at least one horizontal-axis auger arranged longitudinally in the oblong tank, i.e., parallel to the longitudinal axis of the mixer wagon 1.

According to a further embodiment not illustrated, the mixer wagon 1 is self-propelled, i.e., the wheels 3 are motorised.

According to a further embodiment not illustrated, the processing and control unit 30 is not integral with the mixer wagon 1, e.g., it is mounted on the towing vehicle, and is remotely and communicatively connected with the electromagnetic spectrum analyser 13 and the load cells 5 through wireless radio communication means of known type, for example comprising a gateway provided with a 4G/5G modem, or a WiFi router, or a pair of Bluetooth devices, depending on the distance to be covered and the radio propagation environment wherein it must operate. Therefore, the mixer wagon 1, the electromagnetic spectrum analyser 13 and the processing and control unit 30 form an apparatus for mixing the ingredients of an animal feed recipe.

According to a further embodiment not illustrated, a memory implemented in a cloud server is used to store data acquired from the electromagnetic spectrum analyser 13 and from the load cells 5 and/or data obtained from the processing described above.

According to further embodiments of the method for optimising loading ingredients, which are alternatives to those described above, the processing and control unit 30 is configured to acquire the reflectance spectrum of the mixture or ingredient from the electromagnetic spectrum analyser 13 when the latter is in the first operating position (figure 3) or, respectively when it is in the second operating position (figure 4 and 5), and to process the acquired reflectance spectrum to determine, in particular to estimate, the actual percentage of dry matter or nutrient, in the mixture or ingredient, in accordance with the remaining steps of the method. In other words, the processing and control unit 30 also performs the processing which in the previously described embodiments was performed by the processing unit of the electromagnetic spectrum analyser 13.

The latter further embodiments simplify the software configuration of the electromagnetic spectrum analyser 13, thus transferring all the processing to the processing and control unit 30.

**Claims**

1. Method for optimising loading animal feed recipe ingredients into a container (4) of a mixer wagon (1), which comprises a mixing system (7) for mixing the ingredients in the container (4) so as to obtain a mixture; the recipe comprising, for each ingredient, a theoretical as-is weight of the ingredient ($P_{tqTeo(i)}$) and, for each ingredient of at least one subset of ingredients of the recipe, a theoretical dry matter percentage of the ingredient or of at least one nutrient of the ingredient ($\%DM_{Teo(i)}$; $\%DM_{Teo(i,j)}$); the method comprising, for each ingredient of the at least one subset of ingredients:

   - determining an actual dry matter percentage of the ingredient or nutrient of the ingredient ($\%DM_{Act(i)}$; $\%DM_{Act(i,j)}$), as a function of a reflectance spectrum of the ingredient or of the mixture acquired by means of an electromagnetic spectrum analyser (13) at a certain electromagnetic radiation, preferably in the near-infrared range; and
   - determining a target as-is weight of the ingredient ($P_{tqTarg(i)}$) as a function of the theoretical as-is weight of the ingredient ($P_{tqTeo(i)}$), the theoretical dry matter percentage of the ingredient or nutrient of the ingredient ($\%DM_{Teo(i)}$; $\%DM_{Teo(i,j)}$) and the actual dry matter percentage of the ingredient or, respectively, of the nutrient of the ingredient ($\%DM_{Act(i)}$; $\%DM_{Act(i,j)}$); the target as-is weight ($P_{tqTarg(i)}$) of the ingredient by defining the quantity of ingredient to be loaded into the container (4).

2. Method according to claim 1, wherein said target as-is weight of the ingredient ($P_{tqTarg(i)}$) is calculated by making the product of the theoretical as-is weight of the ingredient ($P_{tqTeo(i)}$) by the theoretical dry matter percentage of the ingredient or nutrient of the ingredient ($\%DM_{Teo(i)}$; $\%DM_{Teo(i,j)}$) and dividing such a product by the actual dry matter percentage of the ingredient or, respectively, of the nutrient of the ingredient ($\%DM_{Act(i)}$; $\%DM_{Act(i,j)}$).

3. Method according to claim 1 or 2, wherein said electromagnetic spectrum analyser (13) is mounted on the container (4) with a reading window (16) thereof facing the inside of the container (4) for acquiring a reflectance spectrum of the mixture and said recipe comprises an ingredient loading order and, for each ingredient of the at least one subset of ingredients, a percentage ($\%P_{tqTeo(i)}$) of said theoretical as-is weight of the ingredient ($P_{tqTeo(i)}$); said method comprising, for each ingredient of the at least one subset of ingredients:

   - loading into the container (4) an ingredient portion corresponding to the percentage ($\%P_{tqTeo(i)}$) of the theoretical as-is weight of the ingredient ($P_{tqTeo(i)}$); and
   - waiting a preestablished time period ($T_{(i)}$) from loading the ingredient portion while the mixing system (7) works;

   said actual dry matter percentage of the ingredient or nutrient of the ingredient ($\%DM_{Act(i)}$; $\%DM_{Act(i,j)}$) being determined as a function of the reflectance spectrum of the mixture at the end of said time period ($T_{(i)}$); the method further comprising, for each ingredient of the at least one subset of ingredients:

   - loading into the container (4) a residual ingredient portion corresponding to a difference between the target as-is weight ($P_{tqTarg(i)}$) and the already loaded ingredient portion.

4. Method according to claim 3, and comprising, for each ingredient of the at least one subset of ingredients:

   - after having loaded the ingredient portion, measuring the actual as-is weight of the mixture ($P_{tqM(i)}$) by means of gravimetric sensors (5) applied to the container (4);

   said actual dry matter percentage of the ingredient or nutrient of the ingredient ($\%DM_{Act(i)}$; $\%DM_{Act(i,j)}$) being determined as a function of the actual as-is weight of the mixture ($P_{tqM(i)}$) and the reflectance spectrum of the mixture.

5. Method according to claim 4, wherein determining an actual dry matter percentage of the ingredient or nutrient of the ingredient ($\%DM_{Act(i)}$; $\%DM_{Act(i,j)}$) as a function of a reflectance spectrum of the mixture comprises:

   - after having waited said time period ($T_{(i)}$) from loading the ingredient portion, estimating an actual percentage of dry matter or, respectively, of the nutrient in the mixture ($\%DM_{ActM(i)}$; $\%DM_{ActM(i,j)}$) as a function of the reflectance spectrum of the mixture;
   - determining the actual dry matter percentage of the ingredient or, respectively, of the nutrient of the ingredient ($\%DM_{Act(i)}$; $\%DM_{Act(i,j)}$) as a function of the actual as-is weight of the mixture ($P_{tqM(i)}$) and the actual percentage of dry matter or, respectively, of the nutrient in the mixture ($\%DM_{ActM(i)}$; $\%DM_{ActM(i,j)}$).

6. Method according to claim 5, wherein determining the actual dry matter percentage of the ingredient or of the nutrient in the ingredient ($\%DM_{Act(i)}$; $\%DM_{Act(i,j)}$)as a function of the actual as-is weight of the mixture ($P_{tqM(i)}$) and the actual percentage of dry matter or, respectively, of the nutrient in the mixture ($\%DM_{ActM(i)}$; $\%DM_{ActM(i,j)}$) comprising:

- calculating an actual weight of dry matter or, respectively, of the nutrient in the mixture ($PDM_{ActM(i)}$; $PDM_{ActM(i,j)}$) as the product of the actual as-is weight of the mixture ($P_{tqM(i)}$) by the actual percentage of dry matter or, respectively, of the nutrient in the mixture ($\%DM_{ActM(i)}$; $\%DM_{ActM(i,j)}$); and
- calculating a difference in actual weight of dry matter or, respectively, of the nutrient in the mixture with respect to the loading of the previous ingredient, according to the loading order;
- calculating an actual as-is weight difference of the mixture with respect to the loading of the previous ingredient according to the loading order; and
- calculating the actual dry matter percentage of the ingredient or, respectively, of the nutrient of the ingredient ($\%DM_{Act(i)}$; $\%DM_{Act(i,j)}$) as the ratio between said difference in actual weight of dry matter or, respectively, of the nutrient in the mixture and said difference in actual as-is weight of the mixture.

7. Method according to claim 1 or 2, wherein said electromagnetic spectrum analyser (13) is coupled to a sampling container (23) designed to contain one ingredient sample at a time to acquire a reflectance spectrum of the ingredient, said actual dry matter percentage of the ingredient or of the nutrient of the ingredient ($\%DM_{Act(i)}$; $\%DM_{Act(i,j)}$)being determined as a function of the reflectance spectrum of the ingredient.

8. Method according to claim 1 or 2, wherein said recipe comprises a loading order of the ingredients and the method comprises, for each ingredient of the at least one subset of ingredients:

- arranging a sample of each ingredient in a respective sampling container (27) of a multiple sampler (25) coupled with said electromagnetic spectrum analyser (13);
- before loading the ingredient into the container (4) of the mixer wagon (1), moving the respective sampling container (27) in front of a reading window (16) of the electromagnetic spectrum analyser (13) to acquire a reflectance spectrum of the ingredient;

said actual dry matter percentage of the ingredient or nutrient of the ingredient ($\%DM_{Act(i)}$; $\%DM_{Act(i,j)}$) being determined as a function of the reflectance spectrum of the ingredient.

9. Method according to any one of claims 1 to 8, wherein said electromagnetic spectrum analyser (13) is mounted on the container (4) with a reading window (16) thereof facing the inside of the container (4) to for acquiring a reflectance spectrum of the mixture, wherein said recipe comprises an ingredient loading order and, for each ingredient, a theoretical dry matter percentage of the ingredient ($\%DM_{Teo(i)}$), and wherein an ingredient which is not the first following the loading order consists of water; the method comprising:

- before loading the water into the container (4), estimating an actual dry matter percentage in the mixture ($\%DM_{ActM(i-1)}$) as a function of the reflectance spectrum of the mixture;
- before loading the water into the container (4), measuring an actual as-is weight of the mixture ($P_{tqM(i-1)}$) by means of gravimetric sensors (5) applied to the container (4) ;
- calculating a theoretical dry matter percentage in the mixture ($\%DM_{TeoM(i)}$) as a function of the theoretical as-is weight ($P_{tqTeo(i)}$) and the theoretical dry matter percentage ($\%DM_{Teo(i)}$) of all the ingredients to be loaded up to the water;
- calculating a target as-is weight of the water ($P_{tqH2O}$) as a function of the actual dry matter percentage in the mixture ($\%DM_{ActM(i-1)}$), the actual as-is weight of the mixture ($P_{tqM(i-1)}$) and the theoretical dry matter percentage of the mixture ($\%DM_{TeoM(i)}$), said target as-is weight of the water ($P_{tqH2O}$) defining the quantity of water to be loaded into the container (4).

10. Method for modulating the quantity of water in a recipe of animal feed ingredients when loading the ingredients into a container (4) of a mixer wagon (1), which comprises a mixing system (7) for mixing the ingredients in the container (4) so as to obtain a mixture; the recipe comprising an ingredient loading order and, for each ingredient, a theoretical as-is weight of the ingredient ($P_{tqTeo(i)}$) and a theoretical dry matter percentage of the ingredient ($\%DM_{Teo(i)}$); water being an ingredient of the recipe which is not the first following the loading order; the method comprising:

- before loading the water into the container (4), estimating an actual dry matter percentage in the mixture ($\%DM_{ActM(i-1)}$) as a function of a reflectance spectrum of the mixture acquired by means of an electromagnetic spectrum analyser (13) mounted on the container (4) with a reading window (16) thereof facing the inside of the container (4);
- before loading the water into the container (4), measuring an actual as-is weight of the mixture ($P_{tqM(i-1)}$) by means of gravimetric sensors (5) applied to the container (4) ;
- calculating a theoretical dry matter percentage in the mixture ($\%DM_{TeoM(i)}$) as a function of the theoretical as-is weight ($P_{tqTeo(i)}$) and the theoretical dry matter percentage ($\%DM_{Teo(i)}$) of all the ingredients to be loaded up to the water;
- calculating a target as-is weight of the water ($P_{tqH2O}$) as a function of the actual dry matter percentage in the mixture ($\%DM_{ActM(i-1)}$), the actual as-is weight of the mixture ($P_{tqM(i-1)}$) and the theoretical dry matter percentage of the mixture ($\%DM_{TeoM(i)}$), said target as-is weight of the water ($P_{tqH2O}$) defining the quantity of water to be loaded into the container (4).

11. Method according to claim 10, and comprising:

- waiting a preestablished time period (TF) from loading the ingredient preceding the water following the loading order, while the mixing system (7) works;

said actual dry matter percentage in the mixture ($\%DM_{ActM(i-1)}$) being estimated at the end of the said time period (TF).

12. Method according to claims 10 and 11, wherein the theoretical dry matter percentage of the mixture ($\%DM_{TeoM(i)}$) is calculated with the following formula:

$$\%DM_{TeoM(i)} = \frac{\sum_{k=1}^{i} \%DM_{Teo(k)} \cdot P_{tqTeo(k)}}{\sum_{k=1}^{i} P_{tqTeo(k)}},$$

wherein the two summations extend to all the ingredients to be loaded up to water, $P_{tqTeo(k)}$ is the theoretical as-is weight of the k-th ingredient and $\%DM_{Teo(k)}$ is the theoretical dry matter percentage of the k-th ingredient.

13. Method according to any one of claims 10 to 12, wherein calculating a target as-is weight of the water ($P_{tqH2O}$) comprises:

- if said actual dry matter percentage of the mixture ($\%DM_{ActM(i-1)}$) is greater than said theoretical dry matter percentage of the mixture ($\%DM_{Teo(i)}$), then the target as-is weight of the water ($P_{tqH2O}$) is calculated with the following formula:

$$P_{tqH20} = P_{tqM(i-1)} \cdot \left( \frac{\%DM_{ActM(i-1)} - \%DM_{TeoM(i)}}{\%DM_{TeoM(i)}} \right),$$

wherein $P_{tqH2O}$ is the target as-is weight of the water, $P_{tqActM(i-1)}$ is said actual as-is weight of the mixture and $\%DM_{ActM(i-1)}$ is said actual dry matter percentage in the mixture and $\%DM_{TeoM(i)}$ is said theoretical dry matter percentage in the mixture;
- otherwise the target as-is weight of the water ($P_{tqH2O}$) is set to zero.

14. Apparatus for mixing animal feed recipe ingredients, comprising: a mixer wagon (1), which comprises a container (4) designed to contain the ingredients, gravimetric sensors (5) applied to the container (4) for measuring the weight of the contents of the container (4), a motorised mixing system (7) applied to the container (4) for mixing the ingredients in the container (4), and an electromagnetic spectrum analyser (13) mounted on the container (4); and processing and control means (30), which are configured to implement the method according to any one of claims 1 to 13.

FIG.1

FIG.2

FIG.3

FIG.4

FIG.5

Europäisches
Patentamt

European
Patent Office

Office européen
des brevets

# EUROPEAN SEARCH REPORT

Application Number

EP 24 16 8650

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IT 2018 0000 7618 A1 (DINAMICA GENERALE SPA [IT]) 30 January 2020 (2020-01-30) | 1,2, 7-10, 12-14 | INV. A01K5/00 G01N21/3563 G01N21/359 |
| A | * page 5, line 10 - line 20; claims 1-3, 11-12, 5-6 * <br> * page 3, line 20 - line 25 * <br> * page 7, paragraph 3 * <br> * page 7, line 25 - page 7, line 26 * <br> - - - - - | 3-6,11 | |
| A | US 10 455 763 B2 (DINAMICA GENERALE S P A [IT]) 29 October 2019 (2019-10-29) <br> * claim 1; figure 1 * <br> - - - - - | 1 | |
| A | EP 3 498 074 A1 (DINAMICA GENERALE S P A [IT]) 19 June 2019 (2019-06-19) <br> * claim 1; figure 1 * <br> - - - - - | 1 | |
| A | US 2020/309685 A1 (LIET ROBERT JAN [NL]) 1 October 2020 (2020-10-01) <br> * claim 1; figure 1 * <br> - - - - - | 1 | |

TECHNICAL FIELDS
SEARCHED    (IPC)

A01K
G01N

The present search report has been drawn up for all claims

| Place of search | Date of completion of the search | Examiner |
|---|---|---|
| The Hague | 20 January 2025 | Steinbock, Lorenz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

    see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

The Search Division considers that the present European patent application does not comply with the requirements of unity of invention and relates to several inventions or groups of inventions, namely:

1. claims: 1-9(completely); 14(partially)

    Method for optimising loading animal feed recipe ingredients into a container
                        - - -

2. claims: 10-13(completely); 14(partially)

    Method for modulating the quantity of water in a recipe of animal feed ingredients
                        - - -

## ANNEX TO THE EUROPEAN SEARCH REPORT
## ON EUROPEAN PATENT APPLICATION NO.

EP 24 16 8650

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2025

| Patent document cited in search report | | Publication date | Patent family member(s) | | Publication date |
|---|---|---|---|---|---|
| IT 201800007618 | A1 | 30-01-2020 | --------------------------------- | | |
| US 10455763 | B2 | 29-10-2019 | NONE | | |
| EP 3498074 | A1 | 19-06-2019 | NONE | | |
| US 2020309685 | A1 | 01-10-2020 | CA | 3070334 A1 | 25-09-2020 |
| | | | EP | 3714685 A1 | 30-09-2020 |
| | | | US | 2020309685 A1 | 01-10-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23208976